(19) **Europäisches Patentamt**
**European Patent Office**
**Office européen des brevets**

(11) **EP 2 239 864 A2**

(12) **EUROPEAN PATENT APPLICATION**

(43) Date of publication:
**13.10.2010 Bulletin 2010/41**

(51) Int Cl.:
*H04B 1/707* (2006.01)    *H04B 7/26* (2006.01)
*H04W 56/00* (2009.01)

(21) Application number: **10170435.1**

(22) Date of filing: **24.05.2000**

(84) Designated Contracting States:
**AT BE CH CY DE DK ES FI FR GB GR IE IT LI LU MC NL PT SE**

(30) Priority: **21.05.1999 US 136664 P**

(62) Document number(s) of the earlier application(s) in accordance with Art. 76 EPC:
**07114499.2 / 1 850 497**
**04008295.0 / 1 443 684**
**00937742.5 / 1 188 260**

(71) Applicant: **InterDigital Technology Corporation Wilmington, DE 19810 (US)**

(72) Inventors:
• **Sezgin, Nadir**
  **LEDGEWOOD, NJ 07852 (US)**
• **Ozluturk, Fatih**
  **Port Washington, NY 11050 (US)**

(74) Representative: **Engdahl, Stefan**
  **AWAPATENT AB**
  **P.O. Box 45086**
  **104 30 Stockholm (SE)**

Remarks:
This application was filed on 22-07-2010 as a divisional application to the application mentioned under INID code 62.

(54) **Cell search procedure for time division duplex communication systems using code division multiple access**

(57)    A base station sends a synchronization signal in an assigned time slot to a user equipment in a time division duplex code division multiple access communication system. The base station has an assigned code group out of a predetermined number of code groups. The base station transmits selected secondary synchronization code signals out of a set of secondary synchronization code signals. The plurality of secondary synchronization code signals numbers less than half of the predetermined number of code groups. The user equipment identifies the transmitted selected secondary code signals. Based on in part the identified secondary synchronization code signals, the assigned code group is determined.

FIG. 7

EP 2 239 864 A2

**Description**

BACKGROUND

This invention generally relates to spread spectrum Time Division Duplex (TDD) communication systems using Code Division Multiple Access (CDMA). More particularly, the present invention relates to cell search procedure of User Equipment (UE) within TDD/CDMA communication systems.

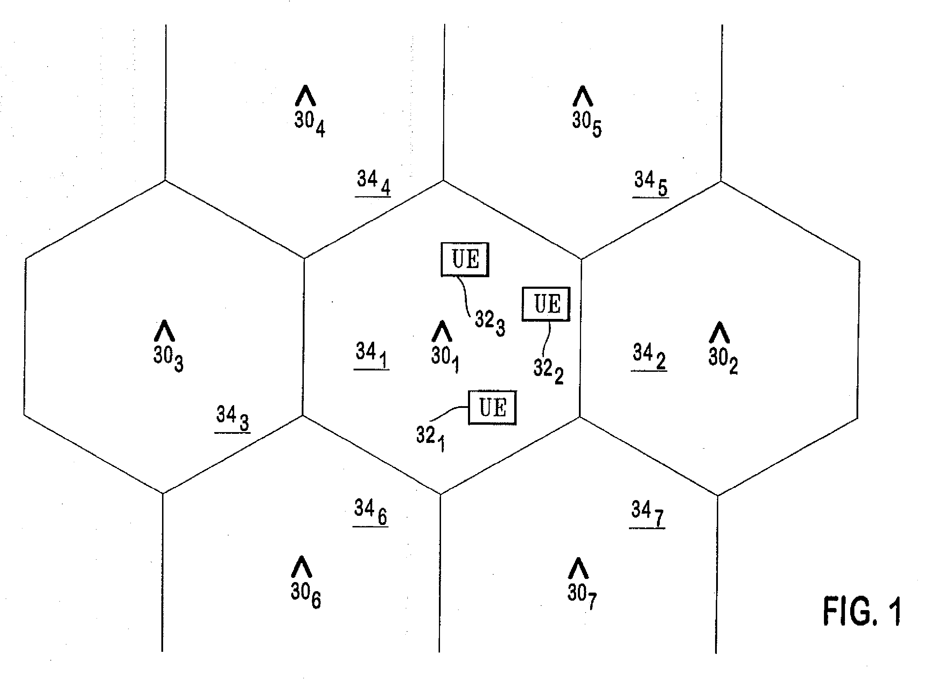

**Figure 1** depicts a wireless spread spectrum TDD/CDMA communication system. The system has a plurality of base stations $30_1$ to $30_7$. Each base station $30_1$ has an associated cell $34_1$ to $34_7$ and communicates with user equipments (UEs) $32_1$ to $32_3$ in its cell $34_1$.

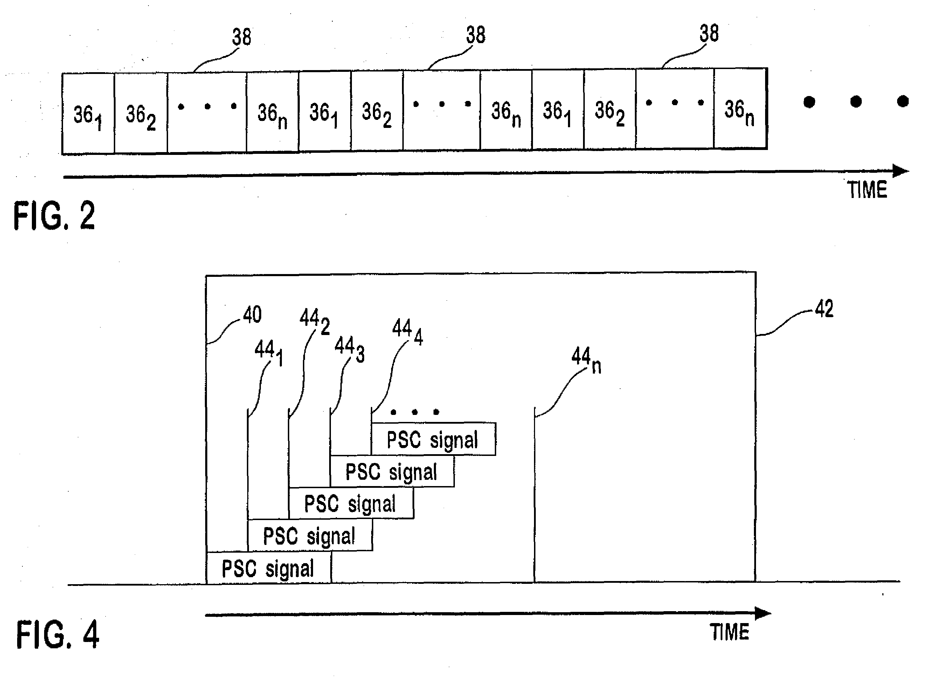

In addition to communicating over different frequency spectrums, TDD/CDMA systems carry multiple communications over the same spectrum. The multiple signals are distinguished by their respective code sequences (codes). Also, to more efficiently use the spectrum, TDD/CDMA systems as illustrated in **Figure 2** use repeating frames **38** divided into a number of time slots $36_1$ to $36_n$, such as sixteen time slots 0 to 15. In such systems, a communication is sent in selected time slots $36_1$ to $36_n$ using selected codes. Accordingly, one frame **38** is capable of carrying multiple communications distinguished by both time slot $36_1$ to $36_n$ and code.

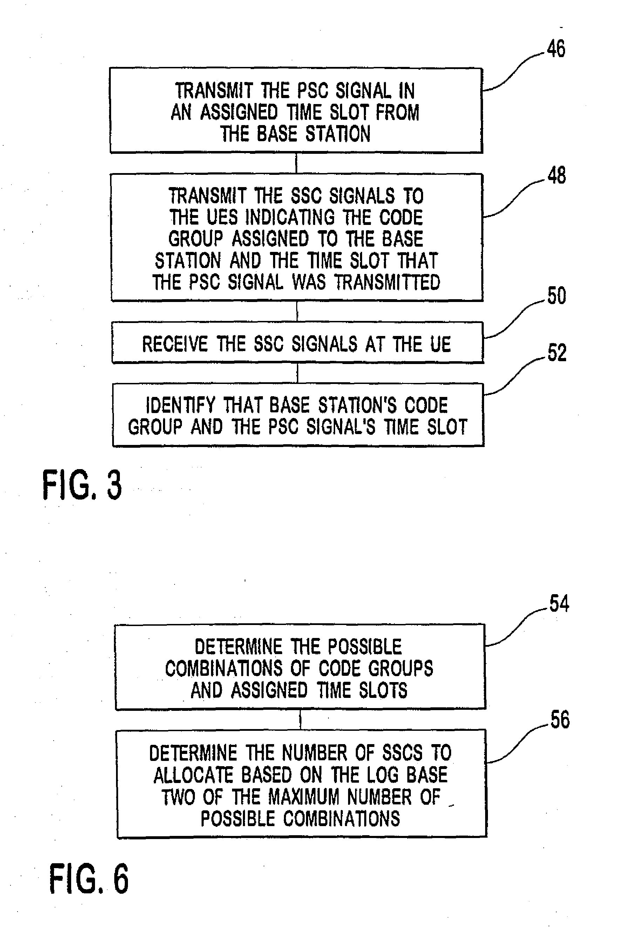

For a UE $32_1$ to communicate with a base station $30_1$, time and code synchronization is required. **Figure 3** is a flow chart of the cell search and synchronization process. Initially, the UE $32_1$ must determine which base station $30_1$ to $30_7$ and cell $34_1$ to $34_7$ to communicate. In a TDD/CDMA system, all the base stations $30_1$ to $30_7$ are time synchronized within a base station cluster. For synchronization with UEs $32_1$ to $32_7$, each base station $30_1$ to $30_7$ sends a Primary Synchronization Code (PSC) and several Secondary Synchronization Code (SSC) signals in the time slot dedicated for synchronization. The PSC signal has an associated chip code, such as an unmodulated 256 hierarchical code, and is transmitted in the dedicated time slot, step **46**. To illustrate, a base station $30_1$ may transmit in one or two time slots, such as for a system using time slots 0 to 15 in time slot K or slot K+8, where K is either 0, ..., 7.

One technique used to generate a PSC signal is to use two 16 hierarchical sequences, such as X1 and X2 in **Equations 1** and **2**.

$$X1 = [1, 1, -1, -1, 1, -1, 1, -1, -1, -1, -1, -1, 1, 1, 1, -1] \qquad \text{Equation 1}$$

$$X2 = [1, 1, -1, -1, -1, -1, 1, -1, 1, 1, -1, 1, 1, 1, -1, 1] \qquad \text{Equation 2}$$

**Equation 3** illustrates one approach to generate a 256 hierarchal code, y(i), using X1 and X2.

$$y(i) = X1 \ (i \bmod 16) \ x \ X2 \ (i \ div \ 16), \text{ where } i = 0, ..., 255 \qquad \text{Equation 3}$$

Using y(i), the PSC is generated such as by combining y(i) with the first row of length 256 Hadamarad matrix, $h_0$, to produce Cp(i) as in **Equation 4.**

$$C_p(i) = y(i) \ x \ h_0(i), \text{ where } i = 0, ..., 255 \qquad \text{Equation 4}$$

Since the first row of the Hadamarad matrix is an all one sequence, **Equation 4** reduces to **Equation 5.**

$$C_p(i) = y(i), \text{ where } i = 0, ..., 255 \qquad \text{Equation 5}$$

The Cp(i) is used to produce a spread spectrum PSC signal suitable for transmission.

To prevent the base stations' communications from interfering with each other, each base station $30_1$ to $30_7$ sends its PSC signal with a unique time offset, $t_{offset}$, from the time slot boundary **40**. Differing time offsets are shown for time slot **42** in **Figure 4**. To illustrate, a first base station $30_1$ has a first time offset $44_1$, $t_{offset,1}$ for the PSC signal, and a second base station $30_2$, has a second time offset $44_2$, $t_{offset,2}$.

To differentiate the different base stations $30_1$ to $30_7$ and cells $34_1$ to $34_7$, each base station $30_1$ to $30_7$ within the cluster is assigned a different group of codes (code group). One approach for assigning a $t_{offset}$ for a base station using an $n^{th}$ code group $44_n$, $t_{offset,n}$ is **Equation 6.**

$$t_{offset,n} = n \cdot 71 T_c \qquad\qquad \text{Equation 6}$$

$T_c$ is the chip duration and each slot has a duration of 2560 chips. As a result, the offset $42_n$ for each sequential code group is spaced 71 chips.

Since initially the UE $32_1$ and the base stations $30_1$ to $30_7$ are not time synchronized, the UE $32_1$ searches through every chip in the frame **38** for PSC signals. To accomplish this search, received signals are inputted to a matched filter which is matched to the PSC signal's chip code. The PSC matched filter is used to search through all the chips of a frame to identify the PSC signal of the base station $30_1$ having the strongest signal. This process is referred to as step-1 of cell search procedure.

After the UE $32_1$ identifies the PSC signal of the strongest base station $30_1$, the **UE $32_1$** needs to determine the time slot $36_1$ to $36_n$ in which that PSC and SSC signals are transmitted (referred to as the Physical Synchronization Channel (PSCH) time slot) and the code group used by the identified base station $30_1$. This process is referred to as step-2 of cell search procedure. To indicate the code group assigned to the base station $30_1$ and the PSCH time slot index, the base station $30_1$ transmits signals having selected secondary synchronization codes (SSCs), step **48**. The UE $32_1$ receives these SSC signals, step **50,** and identifies the base station's code group and PSCH time slot index based on which SSCs were received, step **52.**

For a TDD system using 32 code groups and two possible PSCH time slots per frame, such as time slots K and K+8, one approach to identify the code group and PSCH time slot index is to send a signal having one of 64 SSCs. Each of the synchronization codes corresponds to one of the 32 code groups and two possible PSCH time slots. This approach adds complexity at the UE $32_1$ requiring at least 64 matched filters and extensive processing. To identify the code group and PSCH time slot index, 17,344 real additions and 128 real multiplications are required in each PSCH time slot and 64 real additions are required for the decision.

An alternative approach for step-2 of cell search procedure uses 17 SSCs. These 17 SSCs are used to index the 32 code groups and two possible PSCH time slots per frame. To implement this approach, at least 17 matched filters are required. To identify the code group and time slot, 1,361 real additions and 34 real multiplications are required for each PSCH time slot. Additionally, 512 real additions are required for the decision.

It would be desirable to reduce the complexity required by a UE 32, to perform cell search procedure.

SUMMARY

A base station sends a synchronization signal in an assigned time slot to a user equipment in a time division duplex code division multiple access communication system. The base station has an assigned code group out of a predetermined number of code groups. The base station transmits selected secondary synchronization code signals out of a set of secondary synchronization code signals. The plurality of secondary synchronization code signals numbers less than half of the predetermined number of code groups. The user equipment identifies the transmitted selected secondary code signals. Based on in part the identified secondary synchronization code signals, the assigned code group is determined.

BRIEF DESCRIPTION OF THE DRAWINGS

**Figure 1** illustrates a prior art TDD/CDMA system.
**Figure 2** illustrates time slots in repeating frames of a TDD/CDMA system.
**Figure 3** is a flow chart of cell search.
**Figure 4** illustrates time offsets used by differing base stations sending primary synchronization code signals.
**Figure 5** is a diagram of the simplified components of a user equipment and a base station using binary phase shift keying modulation for cell search.
**Figure 6** is a flow chart of secondary synchronization code assignment.
**Figure 7** illustrates the simplified components of a user equipment and a base station using quadrature phase shift keying modulation for cell search.
**Figure 8** illustrates the simplified components of a user equipment and a base station reducing the maximum number of transmitted secondary synchronization codes using quadrature phase shift keying modulation.
**Figures 9** to **17** are graphs depicting the performance of various synchronization systems under varying simulated channel conditions.

DETAILED DESCRIPTION OF THE PREFERRED EMBODIMENTS

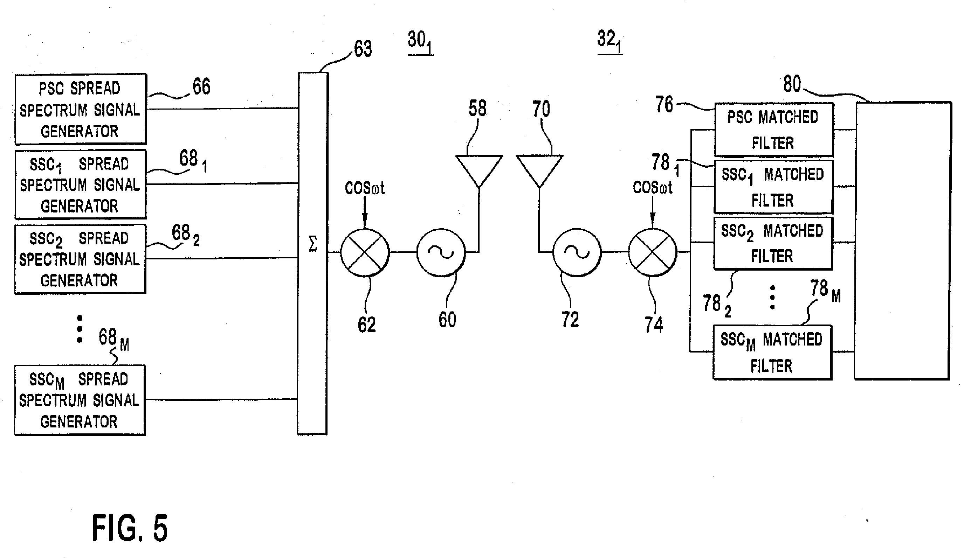

The preferred embodiments will be described with reference to the drawing figures where like numerals represent like elements throughout. **Figure 5** shows the simplified circuitry of a base station $30_1$ and a UE $32_1$ for use in cell search. During step-1 of the cell search, the base station $30_1$ generates a PSC signal using a PSC spread spectrum signal generator **66** having the time offset in the time slot **42** associated with the base station $30_1$. The PSC signal is combined by a combiner **63** with M SSC signals. The combined signal is modulated by a modulator **62** to carrier frequency. The modulated signal passes through an isolator **60** and is radiated by an antenna **58** or, alternately, an antenna array.

The UE $32_1$ receives signals using an antenna **70** or, alternately, an antenna array. The received signals are passed through an isolator **72** where they are demodulated by a demodulator **74** to baseband frequency. During step-1 of the cell search, the PSC matched filter **76** is used by the processor **80** to search through all the chips of a frame **38** to identify the PSC signal of the base station $30_1$ having the strongest signal.

One approach for detection of a PSC signal location in a frame is as follows. A selected number of positions in the received signal frame, such as forty, having the highest number of accumulated chip matches (i.e. maximum signal strength), are repeatedly correlated at the same positions in subsequent frames **38**. Out of the selected locations, the one having the highest number of cumulative matches (i.e. the maximum signal strength) is identified as the location of the PSC signal.

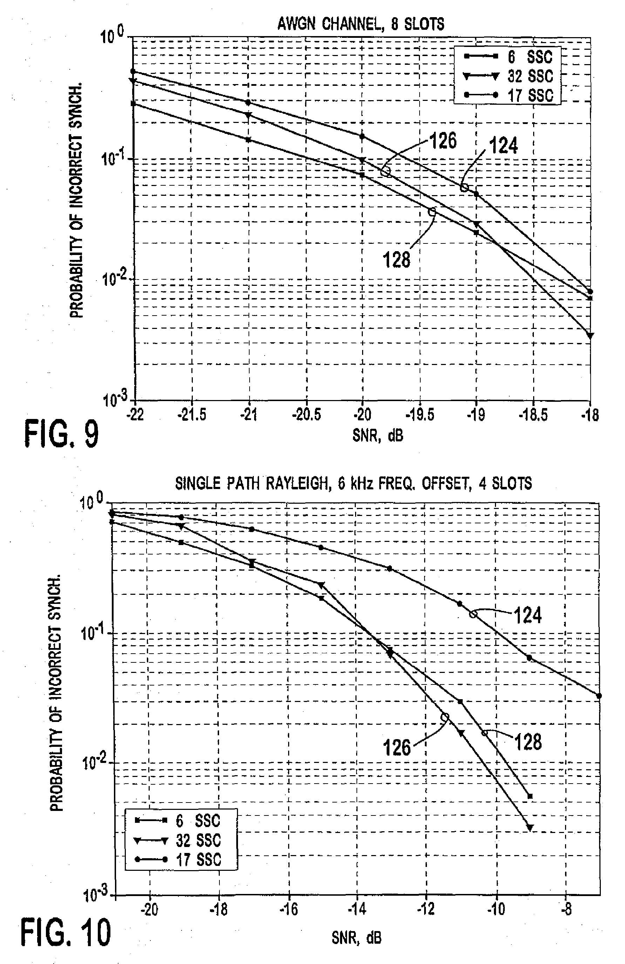

For step-2 of the cell search procedure, the base station $30_1$ generates SSC signals, SSC to $SSC_M$, using SSC spread spectrum signal generators $68_1$ to $68_M$. To reduce the complexity at the UE $32_1$, a reduced number of SSCs are used. By reducing the SSCs, the number of matched filters required at the UE $32_1$ is reduced. Additionally, the reduced SSCs decreases the processing resources required to distinguish the different codes. The reduced SSCs also reduces the probability of incorrect detection of a code group number and PSCH time slot index (see **Figures 9-15**).

One approach to reduce the SSCs is shown in the flow chart of **Figure 6.** The number of SSCs used, M, is based on the number of code groups and PSCH time slots used per frame, step **54**. The number of SSCs, M, is the log base two of the maximum combination number rounded up to the next higher integer, step **56,** as in **Equation 7.**

$$M = \log_2 (\# \text{ of Code Groups} \times \# \text{ of PSCH Time Slots per frame})$$

**Equation 7**

The base station $30_1$ generates, using SSC signal generators $68_1$ to $68_M$, the SSC signals associated with the base station's code group and the number of PSCH time slots per frame. The SSC signals are combined with each other as well as the PSC signal by combiner **63**. Subsequently, the combined signal is modulated by the modulator **62,** passed through the isolator **60** and radiated by the antenna **58**. The UE $32_1$ receives the transmitted signal, passes it through the isolator **72** and demodulates the received signal using the demodulator **74**. Using corresponding $SSC_1$ to $SSC_M$ matched filters $78_1$ to $78_M$, the processor **80** determines the binary code that SSCs are modulated. Based on the determined binary code, the base station's code group and PSCH time slot index in the frame is determined. To illustrate for a system using 32 code groups and two possible time slots per frame, such as slots K and K+8, the number of binary bits needed to modulate SSCs, M, is six ($\log_2 64$). In such a system, the six SSCs are modulated with six bits using binary phase shift keying (BPSK) modulation. The six SSCs are chosen among the 256 rows of Hadamarak matrix, $H_8$. The Hadamarak matrix is generated sequentially, such as by **Equations 8** and **9.**

$$H_0 = (1)$$

**Equation 8**

$$H_t = \begin{bmatrix} H_{t-1} & H_{t-1} \\ H_{t-1} & H_{t-1} \end{bmatrix}, \ t = 1,...,8 \qquad \textbf{Equation 9}$$

A particular code, $C_{k,n}(i)$, where n is the code group number associated with a SSC is produced using **Equation 10.** The six rows of Hadamarak matrix, $H_8$, are r(k) = [24, 40, 5 6, 104, 120, 136].

$$C_{k,n}(i) = b_k, n \ x \ h_{r(k)}(i) \ x \ y(i), \text{ where } i = 0, 1, ..., 255 \text{ and } k = 1, ..., 6$$

$$\textbf{Equation 10}$$

The value of $b_2$ to $b_6$ are depicted in **Table 1.**

| Code Group (n) | $b_{6,n}$ | $b_{5,n}$ | $b_{4,n}$ | $b_{3,n}$ | $b_{2,n}$ |
|---|---|---|---|---|---|
| 1 | +1 | +1 | +1 | +1 | +1 |
| 2 | +1 | +1 | +1 | +1 | -1 |
| 3 | +1 | +1 | +1 | -1 | +1 |
| ... | ... | ... | ... | ... | ... |
| 32 | -1 | -1 | -1 | -1 | -1 Table 1 |

The value of $b_{1,n}$ is depicted in **Table 2.**

| PSCH time slot order in the frame | $b_{1,n}$ |
|---|---|
| K, where K = 0,...,7 | +1 |
| K + 8 | -1 Table 2 |

Each code corresponds to one SSC, $SSC_1$ to $SSC_6$. To distinguish the differing base stations' SSC signals from one another, each of the base stations' SSC signals has the same offset as its PSC signal. At the UE **$32_1$,** the step-2 of the cell search procedure (i.e. code group number and PSCH slot order detection) is performed as follows. The received baseband signal is first correlated with Cp as per **Equation 4** to obtain phase reference. This correlation is performed by PSC matched filter **76** in **Figure 5.** The phase reference is obtained by normalizing the correlation value obtained at the output of the PSC matched filter **76.** The received baseband signal is also correlated with C1,...,C6 as per **Equation 10** to obtain binary data that represent the code group of the base station **$30_1$** and PSCH slot order in the frame. This correlation is performed by SSC matched filters **$78_1$-$78_M$** in **Figure 5.** These matched filter outputs are derotated before BPSK demodulation. The derotation is performed by complex multiplication of the complex conjugate of the phase reference. The derotated SSC matched filter outputs are BPSK demodulated. The BPSK demodulation is performed by a hard limiter on the real part of the derotated SSC matched filter outputs. As a result, if the real part of the derotated SSC matched filter output is greater than zero, it is demodulated as +1. Otherwise, it is demodulated as -1. The demodulated binary data represents the code group of the base station **$30_1$** and the PSCH time slot order in the frame as depicted in **Table 1** and **Table 2,** respectively. To ease detection of the six SSCs, the UE $32_1$ accumulates the derotated outputs of the SSC matched filters **$78_1$-$78_M$** over a number of the PSCH time slots, such as four or eight.

Using six SSCs, for 32 code groups and two possible PSCH time slots, requires 653 real additions and 28 real multiplications at the UE **$32_1$** to identify the code group/PSCH time slot index. For the decision, no additions or multiplications are required. Accordingly, reducing the number of transmitted SSCs in the PSCH time slot reduces the processing at the UE **$32_1$.**

Alternately, to reduce the number of S SCs even further quadrature phase shift keying (QPSK) modulation is used. To reduce the SSC number, each SSC signal is sent on either an In-phase (I) or Quadrature (Q) component of the PSCH. One extra bit of data associated with either using the I or Q carrier is used to distinguish the code group/PSCH time slots. As a result, the number of SSCs, M, required by **Equation 6** is reduced by one.

For instance, to distinguish 32 code groups and two possible PSCH time slots, five SSCs (M = 5) are required. The code groups are divided in half (code groups 1-16 and code groups 17-32). When the SSCs are transmitted on the I carrier, it restricts the code groups to the lower half (code groups 1-16) and when the SSCs are transmitted on the Q carrier, it restricts the code groups to the upper half (code groups 17-32). The five SSCs distinguish between the remaining sixteen possible code groups and two possible PSCH time slots.

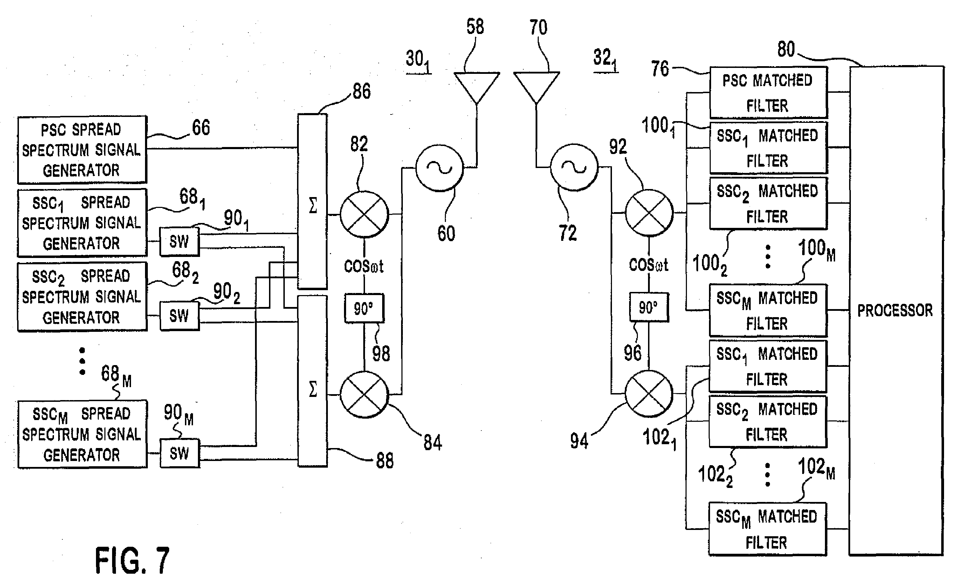

A simplified base station $30_1$ and UE $32_1$ using QPSK modulation are shown in **Figure 7.** The base station $30_1$ generates the appropriate SSC signals for its code group and PSCH time slot using the SSC spread spectrum signal generators $68_1$ to $68_M$. Also based on the base station's code group/PSCH time slot index, switches $90_1$ to $90_M$ either switch the outputs of the generators $68_1$ to $68_M$ to an I combiner **86** or a Q combiner **88**. The combined I signal which includes the PSC signal is modulated by an I modulator **82** prior to transmission. The combined Q signal is modulated by a Q modulator **84** prior to transmission. One approach to produce the Q carrier for modulating the signal is to delay the I carrier by ninety degrees by a delay device **98**. The UE $32_1$ demodulates the received signals with both an I demodulator **92** and a Q demodulator **94**. Similar to the base station $30_1$, the UE $32_1$ may produce a Q carrier for demodulation using a delay device **96**. Obtaining binary data representing the lower or higher half of the 16 code groups and PSCH time slot index is the same as applying BPSK demodulation on the I and Q components of the received signal respectively. The I matched filters $100_1$ to $100_M$ are used by the processor **80** to determine whether any SSC signals were sent on the I component of the PSCH. A decision variable, $I_{dvar}$, is obtained such as by using **Equation 11.**

$$I_{dvar} = |rx_1| + |rx_2| + ... + |rx_m| \qquad \text{Equation 11}$$

$|rx_i|$ is the magnitude of the real component (I component) of the $i^{th}$ SSC matched filter output. Likewise, the Q matched filters $102_1$ to $102_M$ are used by the processor **80** to determine whether any SSC signals were sent on the Q component of the PSCH. A decision variable, $Q_{dvar}$, is obtained such as by using **Equation 12.**

$$Q_{dvar} = |ix_1| + |ix_2| + ... + |ix_M| \qquad \text{Equation 12}$$

$|ix_i|$ is the magnitude of the imaginary (Q component) of the $i^{th}$ SSC matched filter outputs.

If $I_{dvar}$ is greater than $Q_{dvar}$, the SSC signals were transmitted on the I component. Otherwise, the SSC signals were transmitted on the Q component.

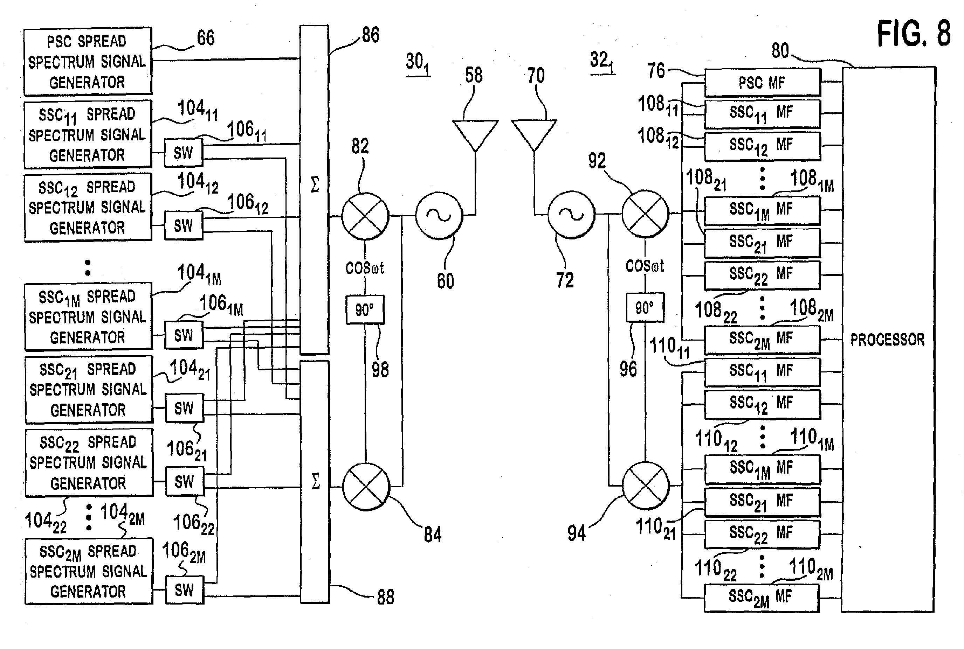

Another approach using QPSK modulation to reduce the number of SSC signals transmitted is depicted in **Figure 8.** Instead of transmitting the number of SSCs of **Figure 7,** the number of SSCs, M, representing the code group number and PSCH time slot index is reduced by one. To regain the one lost bit of information by reducing the SSCs, two sets of M SSCs are used. For instance using 32 code groups and two possible PSCH time slots, one set, $SSC_{11}$ to $SSC_{14}$, is assigned to the lower code groups, such as code groups 1 to 16, and the second set, $SSC_{21}$ to $SSC_{24}$, is assigned to the upper code groups, such as code groups 17 to 32. For the lower code group, sending $SSC_{11}$ to $SSC_{14}$ on the I carrier restricts the code groups to 1 to 8. The Q carrier restricts the code groups to 9 to 16. Likewise, for the upper code group, in phase $SSC_{21}$ to $SSC_{24}$ restricts the code groups to 17 to 24 and Q $SSC_{21}$ to $SSC_{24}$ restricts the code groups to 25 to 32. As a result, the maximum number of SSCs transmitted at one time is reduced by one. By reducing the number of SSCs, the interference between SSC signals is reduced. Reduced interference between SSCs allows higher transmission power levels for each SSC signal easing detection at the UE $32_1$.

A simplified base station $30_1$ and UE $32_1$ implementing the reduced SSC approach is shown in **Figure 8.** At the base station $30_1$, two sets of M SSC spread spectrum signal generators $104_{11}$ to $104_{2M}$ generate the SSC signals corresponding to the base station's code group and PSC time slot. The corresponding SSC signals are switched using switches $106_{11}$ to $106_{2M}$ to either an I **82** or Q modulator **84** as appropriate for that base station's code group and PSCH time slot. At the UE $32_1$, an I set of matched filters $108_{11}$ to $108_{2Q}$ is used to determine if any of the SSCs were sent on the I carrier. A Q set of matched filters $110_{11}$ to $110_{2M}$ is used to determine if any of the SSCs were sent on the Q carrier. By detecting the transmitted I and Q SSCs, the processor **80** determines the base station's code group and PSCH time slot.

One approach to determining which of 32 code groups and two possible PSCH time slots is used by the base station $32_1$ follows. After the processor **80** accumulates data from matched filters $110_{11}$ to $110_{24}$, the code group set, either $SSC_{11}$ to $SSC_{14}$ or $SSC_{21}$ to $SSC_{24}$, is determined using **Equations 13** and 14.

$$var\_set\ 1\ =\ |r\ x_{11}|\ +\ |i\ x_{12}|\ +...+\ |r\ x_{14}|\ +\ |i\ x_{14}|$$

Equation 13

$$var\_set\ 2\ =\ |r\ x_{21}|\ +\ |i\ x_{22}|\ +...+\ |r\ x_{24}|\ +\ |i\ x_{24}|$$

Equation 14

The values, $rx_{11}$ to $rx_{24}$, are the number of accumulated matches for a respective SSC, $SSC_{11}$, to $SSC_{24}$, received in the I channel. Similarly, $ix_{11}$ to $ix_{24}$ are the number of accumulated matches for the Q channel for $SSC_{11}$ to $SSC_{24}$. **Equations 13** and **14** require a total of 16 real additions. var_set 1 represents the total accumulations of the first SSC set, $SSC_{11}$ to $SSC_{14}$ var_set 2 represents the total accumulations of the second SSC set, $SSC_{21}$, to $SSC_{24}$. The processor **80** compares var_set 1 to var_set 2 and the larger of the two variables is presumed to be the SSC set transmitted by the base station **32$_1$**.

To determine whether the SSCs were transmitted on the I or Q channel, **Equations 15** and **16** are used.

$$var\_I\ =\ |r\ x_{p1}|\ +...+\ |r\ x_{p4}|$$

Equation 15

$$var\_Q\ =\ |i\ x_{p1}|\ +...+\ |i\ x_{p4}|$$

Equation 16

If var_set 1 is selected as being larger than var_set 2, the value of p is one. Conversely, if var_set 2 is larger, the value of p is two. var_I is the accumulated values for the selected set on the I carrier and var_Q is the accumulated values on the Q carrier. The larger of the two variables, var_I and var_Q, is presumed to be the channel that the selected set was transmitted over. By ordering the additions in **Equations 13** and **14,** the values of var_I and var_Q can be determined simultaneously with var_set 1 and var_set 2. Accordingly, determining whether the I or Q carrier was used requires no additional additions. As a result, using QPSK modulation and two SSC sets requires 803 real additions and 36 real multiplications in each time slot and 16 real additions for the decision.

**Figures 9** to **15** are graphs illustrating the performance for distinguishing 32 code groups/two PSCH time slots of systems using 32 SSCs **128,** 17 SSCs **124** and 6 SSCs **126.** The graphs show the performance for various simulated channel conditions. The simulations accumulated the SSC matches at the UE **32$_1$** over four or eight PSCH time slots and compared the probability of an incorrect synchronization to the channel's signal to noise ratio (SNR) in decibels.

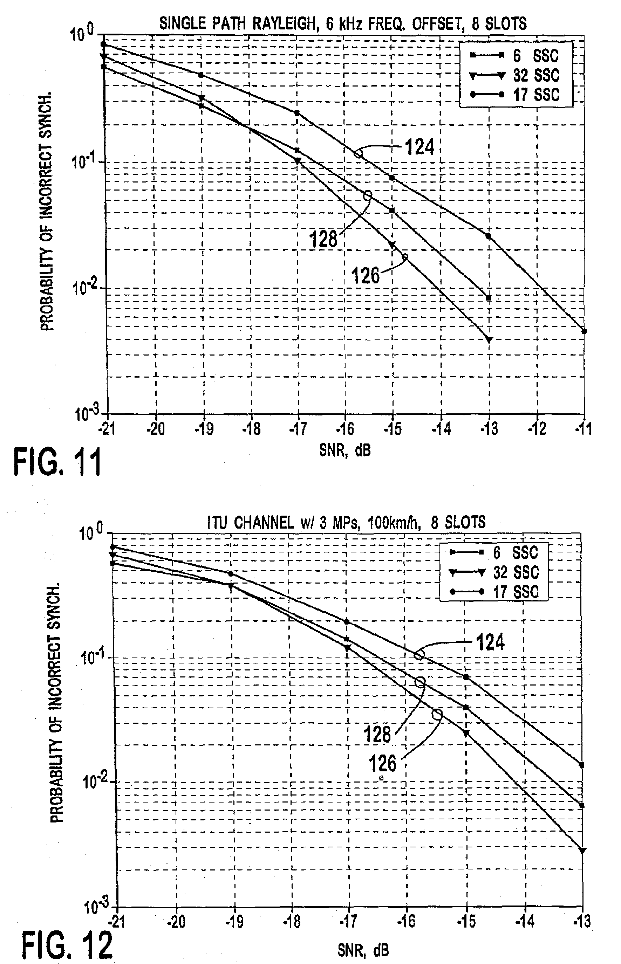

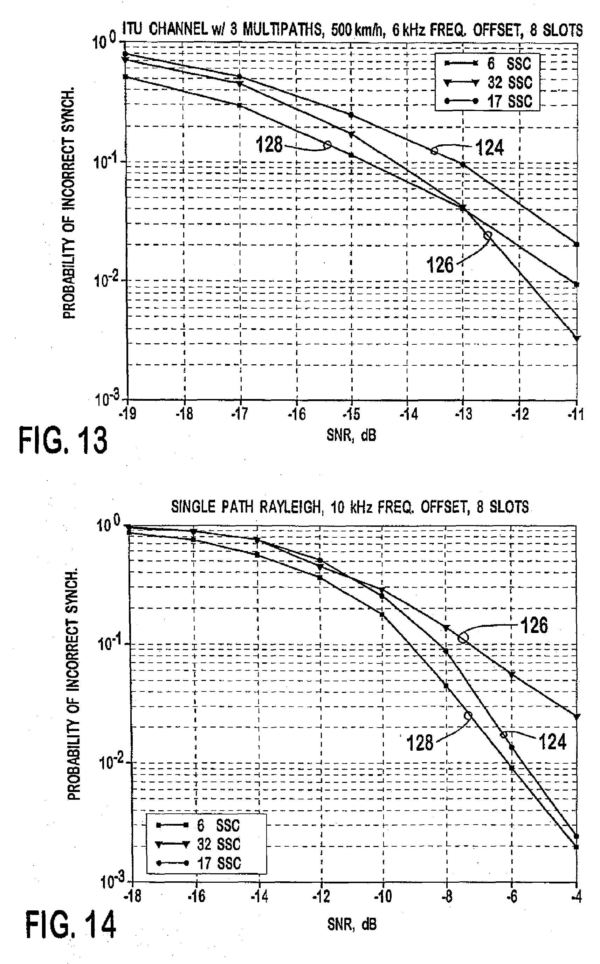

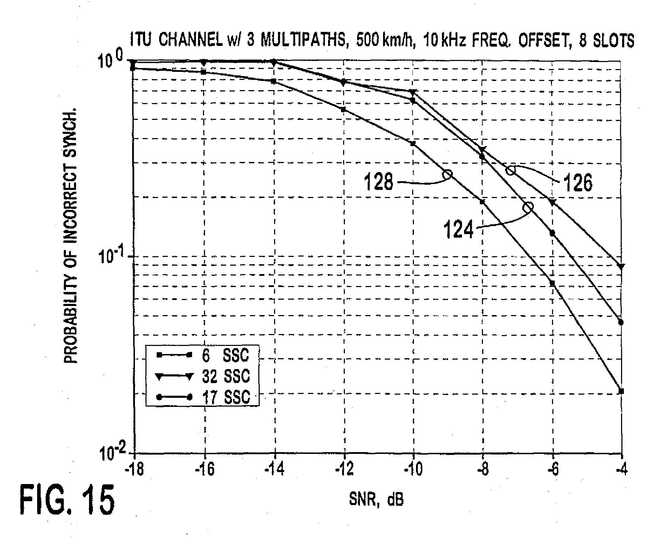

The **Figure 9** simulation uses an additive white gaussian noise (AWGN) channel and accumulation over eight PSCH time slots. The **Figure 10** simulation uses a single path Rayleigh fading channel with a six kilohertz (kHz) frequency offset and accumulation over four PSCH time slots. The **Figure 11** simulation is the same as the **Figure 10** simulation except the accumulation was over eight PSCH time slots. The **Figure 12** simulation uses an ITU channel with three multipaths with a UE **32$_1$** moving at 100 kilometers per hour (km/h) and accumulation over eight PSCH time slots. The **Figure 13** simulation uses an ITU channel with three multipaths having six kilohertz (kHz) frequency offset and a UE **32$_1$** moving at 500 km/h with accumulation over eight PSCH time slots. The **Figure 14** simulation uses a single path Rayleigh channel having 10 kHz frequency offset with accumulation over eight PSCH time slots. The **Figure 15** simulation uses an ITU channel with three multipaths having 10 kHz frequency offset and the UE **32$_1$** moving at 500 km/h with accumulation over eight PSCH time slots.

Under the simulated conditions of **Figures 14** and **15,** 6 SSCs **128** outperforms the other techniques **124, 126.** As shown in **Figures 9** to **13,** 6 SSCs **128** performs favorably in comparison to the other techniques **124, 126.**

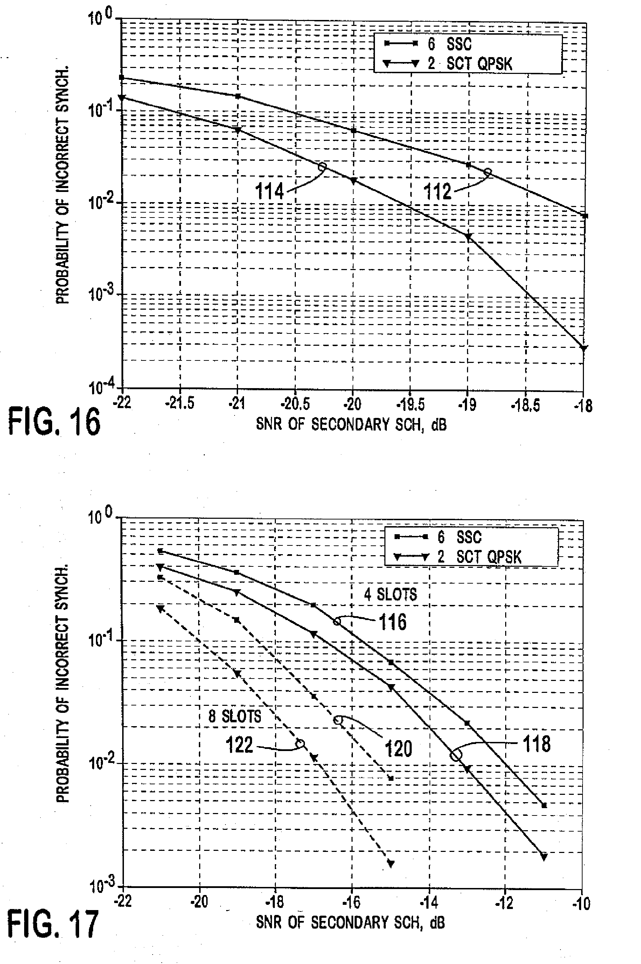

**Figure 16** is a graph of the simulated performance of 6 SSCs **114** using BPSK and the two sets of 4 SSCs **112** using QPSK modulation. The simulation used an eight PSCH time slot accumulation of the matches for each SSC and transmission over an AWGN channel. As shown, two set QPSK modulation **112** outperformed 6 SSC BPSK modulation **114.**

**Figure 17** illustrates the performance of BPSK and two set QPSK modulation accumulating matches over four and eight PSCH time slots. The SSCs were simulated as being transmitted over a single path Rayleigh channel. Performance for both modulation schemes improves with additional time slot correlations. Two set QPSK modulation for four PSCH time slots **116** and eight PSCH time slots **120** outperforms BPSK modulation for four PSCH time slots **118** and eight PSCH time slots **122,** respectively.

ITEMISED LIST

Item 1. A method for a user equipment to synchronize both timing and a code group assigned to a base station in a time division duplex code division multiple access communication system, the system communicating using time slots in repeating frames, the assigned code group being one out of a predetermined number N of possible code groups, the method comprising:

transmitting from the base station a primary code synchronization signal in a selected time slot in a primary code synchronization channel, the primary code synchronization channel using at least one of the frame time slots for communication;
receiving at the user equipment the primary code synchronization signal;
time synchronizing the user equipment with a received timing of the primary code synchronization signal;
associating each of said N code groups with a unique combination of secondary signals from a set of secondary signals which does not exceed $(\log_2 N) + 1$ in number;
transmitting from the base station selected secondary synchronization signals out of said set of secondary synchronization signals; corresponding to the unique combination of secondary signals associated with the assigned code group;
receiving and identifying at the user equipment the transmitted selected secondary synchronization signals; and based on in part the identified selected secondary synchronization signals, determining the base station's assigned code group.

Item 2. The method of item 1 wherein the associating associates a selected time slot in the frames with the unique combination of secondary signals.

Item 3. The method of item 1 wherein each of a plurality of base stations transmit a primary code synchronization signal and the user equipment accumulates chip matches over a set number of frames to determining which of the plurality of base station to communicate.

Item 4. The method of item 3 wherein the set number of frames is forty.

Item 5. The method of item 1 wherein the transmitted secondary signals are modulated with binary data.

Item 6. The method of item 5 wherein the modulated binary data identifies the base station's code group.

Item 7. The method of item 1 wherein the transmitted secondary signals are selectively transmitted using an in-phase or quadrature phase carrier.

Item 8. The method of item 1 further comprising correlating the primary code synchronization signal with the transmitted secondary signals to obtain phrase reference.

Item 9. The method of item 8 wherein the primary code synchronization signal is not modulated with data.

Item 10. The method of item 8 further comprising derotating the received secondary signals based on in part the primary code synchronization signal phase reference.

Item 11. The method of item 10 further comprising match filtering the received secondary signals and accumulating results of the match filtering over a set number of frames.

Item 12. A wireless time division duplex code division multiple access communication system using time slots in repeating frames, a base station having an assigned code group out of a predetermined number N of possible code groups, the system comprising:

the base station comprising:

means for transmitting a primary code synchronization signal in a selected time slot in a primary code synchronization channel, the primary code

synchronization channel using at least one of the frame time slots for communication;
means for associating each of said N code groups with a unique combination of secondary signals from a set of secondary signals which does hot exceed $(\log_2 N) + 1$ in number; and
a user equipment comprising:

means for receiving the primary code synchronization signal;
means for time synchronization with a received timing of the primary code synchronization signal;
means for receiving and identifying the transmitted selected secondary synchronization signals; and
means for determining the base station's assigned code group, based on in part the identified selected secondary synchronization signals.

Item 13. The system of item 12 wherein the receiving and identifying means comprises a plurality of matched filters, at least one matched filter is matched to each secondary signal out of the set of secondary signals.

Item 14. The system of item 13 wherein the secondary signals are transmitted either on an in-phase or quadrature phase carrier and the plurality of matched filters having an in-phase and a quadrature phase matched filter for each secondary signal out of the set of secondary signals.

Item 15. The system of item 12 wherein the associating means associates a selected time slot in the frames with the unique combination of secondary signals.

Item 16. The system of item 12 wherein the base station is one of a plurality of base stations, each base station transmits a primary code synchronization signal and the user equipment further comprising means for accumulating chip matches over a set number of frames to determine which of the plurality of base stations to communicate.

Item 17. The system of item 16 wherein the set number of frames is forty.

Item 18. The system of item 12 wherein the transmitted secondary signals are selectively transmitted using an in-phase or quadrature phase carrier.

Item 19. The system of item 12 wherein the user equipment further comprises means for correlating the primary code synchronization signal with the transmitted secondary signals to obtain phase reference.

Item 20. The system of item 19 wherein the primary code synchronization signal is not modulated with data.

Item 21. The system of item 19 wherein the user equipment further comprises means for derotating the received secondary signals based on in part the primary code synchronization signal phase reference.

Item 22. The system of item 21 wherein the user equipment further comprises means for matched filtering the received secondary signals and means for accumulating results of the match filtering over a set number of frames.

Item 23. A synchronization signal for use in a wireless time division duplex communication system, the time division duplex communication system using time slots in repeating frames for communication, the synchronization signal is transmitted from a base station to identify a code group associated with the base station, the synchronization signal comprising:

a spreading code associated with the base station; and
binary bits modulated by the spreading code using binary phase shift keying.

Item 24. The signal of item. 23 wherein the binary bits are produced by combining a binary code group identifier with a selected row of a Hadamarak matrix.

Item 25. The signal of item 24 wherein the selected row is from a set of possibly selected rows; the possibly selected rows comprising row 24, 40, 56, 104, 120 and 136.

Item 26. The signal of item 23 wherein the signal is transmitted at a predetermined time offset from a time slots leading boundary.

Item 27. The signal of item 23 wherein the base station also transmits another signal, both the another signal and the synchronization signal are spread with the spreading code.

Item 28. The signal of item 27 wherein both the another signal and the synchronization signal are transmitted at a same predetermined time offset from a time slots leading boundary.

Item 29. The signal of item 23 wherein the synchronization signal is selectively transmitted using an in-phase or quadrature phase carrier.

**Claims**

1. A time division duplex, TDD, user equipment, UE, configured to synchronize to a TDD base station, the UE comprising:

an antenna configured to receive a signal from the TDD base station;
a primary synchronization code matched filter configured to determine a primary synchronization code from the received signal;
a first plurality of secondary synchronization code matched filters configured to determine a first plurality of secondary synchronization codes sent on a first carrier from the received signal, wherein the first plurality of secondary synchronization codes are quadrature phased shift keyed, QPSK, modulated and the first carrier is an in-phase, I, carrier;
a second plurality of secondary synchronization code matched filters configured to determine a second plurality of secondary synchronization codes sent on a second carrier from the received signal, wherein the second plurality of secondary synchronization codes are QPSK modulated and the second carrier is a quadrature, Q, carrier; and
a processor in communication with the primary synchronization code matched filter and plurality of secondary synchronization code matched filters, the processor configured to determine a code group assignment and selected timeslot based upon an analysis of the secondary synchronization codes sent on the first and second carriers.

2. The TDD user equipment of claim 1 wherein each of the first and second plurality of secondary synchronization codes correspond to a row of a Hadamard matrix.

3. The TDD user equipment of claim 1 wherein there are 32 code groups.

4. The TDD user equipment of claim 3 wherein the first plurality of secondary synchronization codes is assigned to a first group of codes out of the 32 code groups and the second plurality of secondary synchronization codes is assigned to a second group of codes out of the 32 code groups.

5. The TDD user equipment of claim 4 wherein the first plurality of secondary synchronization codes is assigned to a lower group and the second plurality of secondary synchronization codes is assigned to a higher group.

FIG. 1

EP 2 239 864 A2

38 38 38

$36_1$ | $36_2$ | • • • | $36_n$ | $36_1$ | $36_2$ | • • • | $36_n$ | $36_1$ | $36_2$ | • • • | $36_n$ • • •

TIME

## FIG. 2

40 $44_2$ $44_4$

$44_1$ $44_3$ $44_n$

42

• • •

PSC signal

PSC signal

PSC signal

PSC signal

PSC signal

TIME

## FIG. 4

46

```
TRANSMIT THE PSC SIGNAL IN
AN ASSIGNED TIME SLOT FROM
THE BASE STATION
```

48

```
TRANSMIT THE SSC SIGNALS TO
THE UES INDICATING THE CODE
GROUP ASSIGNED TO THE BASE
STATION AND THE TIME SLOT THAT
THE PSC SIGNAL WAS TRANSMITTED
```

50

```
RECEIVE THE SSC SIGNALS AT THE UE
```

52

```
IDENTIFY THAT BASE STATION'S CODE
GROUP AND THE PSC SIGNAL'S TIME SLOT
```

# FIG. 3

54

```
DETERMINE THE POSSIBLE
COMBINATIONS OF CODE GROUPS
AND ASSIGNED TIME SLOTS
```

56

```
DETERMINE THE NUMBER OF SSCS TO
ALLOCATE BASED ON THE LOG BASE
TWO OF THE MAXIMUM NUMBER OF
POSSIBLE COMBINATIONS
```

# FIG. 6

FIG. 5

FIG. 7

FIG. 8

FIG. 9

AWGN CHANNEL, 8 SLOTS

FIG. 10

SINGLE PATH RAYLEIGH, 6 kHz FREQ. OFFSET, 4 SLOTS

SINGLE PATH RAYLEIGH, 6 kHz FREQ. OFFSET, 8 SLOTS

FIG. 11

ITU CHANNEL w/ 3 MPs, 100km/h, 8 SLOTS

FIG. 12

ITU CHANNEL w/ 3 MULTIPATHS, 500 km/h, 6 kHz FREQ. OFFSET, 8 SLOTS

FIG. 13

SINGLE PATH RAYLEIGH, 10 kHz FREQ. OFFSET, 8 SLOTS

FIG. 14

ITU CHANNEL w/ 3 MULTIPATHS, 500 km/h, 10 kHz FREQ. OFFSET, 8 SLOTS

PROBABILITY OF INCORRECT SYNCH.

SNR, dB

FIG. 15

6 SSC
32 SSC
17 SSC

FIG. 16

FIG. 17